# EUROPEAN PATENT SPECIFICATION

(11) **EP 3 580 187 B1**
(45) Date of publication and mention of the grant of the patent: **24.08.2022**
(21) Application number: 18705481.2
(22) Date of filing: 09.02.2018
(51) Int. Cl.: C03C 17/34

(54) **COATED GLAZING**
BESCHICHTETES GLAS
VITRAGE ENDUIT

(30) Priority: 09.02.2017 GB 201702168
(43) Date of publication of application: 18.12.2019
(73) Proprietor: Pilkington Group Limited, Lancashire L40 5UF (GB)
(72) Inventor: FARNWORTH, Mark Anthony, St Helens Merseyside WA11 8DR (GB); NICHOL, Gary Robert, Warrington Cheshire WA3 4NQ (GB); SKINNER, Paul Andrew, Ashton-in-Makerfield Lancashire WN4 0NA (GB); WARREN, Paul David, Ormskirk Lancashire L40 5TF (GB); ABBOTT, Alex Joseph, St Helens Merseyside WA11 0EY (GB)
(74) Representative: Marsh, Andrew James
(86) International application number: PCT/GB2018/050371
(87) International publication number: WO 2018/146487

(56) References cited:
- EP-A1- 1 053 980
- WO-A1-2015/124951
- WO-A1-2015/150820
- WO-A1-2016/166527
- WO-A1-2017/042585
- WO-A2-2012/056240
- WO-A2-2016/001661

## Description

This invention relates to a coated glazing, a method of manufacture of said glazing and uses of said glazing.

Coated glazings are used in many fields, e.g. in architectural, automotive and technical applications. Such glazings may exhibit advantageous characteristics of low emissivity and/or solar control which can enable improved regulation of heat loss and/or gain through the glazings. In some instances, such as for commercial refrigeration applications (e.g. freezer lids, ice cream counter fronts, and deli-counter fronts), it may be necessary to thermally bend and/or temper the glazing to obtain the desired product. However, these bending and/or tempering processes can lead to subsequent cohesive failures within the coating stack under certain conditions.

US2015146286 (A1) describes a low-e coating that utilises a dielectric barrier layer for regulating the diffusion of oxygen upon thermal treatment to a subjacent functional layer containing a transparent conductive oxide (TCO). The coating stack is said to exhibit improved bendability by avoiding an excessively high oxygen content of the functional layer that results in damage evident as cracks in the functional layer.

However it would be desirable to provide a low-e coated glazing that exhibits reduced incidences of cohesive failures within the coating stack upon thermal bending and/or tempering operations.

According to a first aspect of the present invention there is provided a coated glazing comprising at least the following layers in sequence:
a transparent glass substrate,
a layer based on an oxide of a metal and/or a layer based on an oxide of a metalloid, and
a further layer,
wherein either said layer based on an oxide of a metal or said layer based on an oxide of a metalloid is adjacent said transparent glass substrate,
wherein said layer that is adjacent said transparent glass substrate comprises a surface that, prior to a coating of said surface, has an arithmetical mean height of the surface value, Sa, of at least 4.0 nm when tested in accordance with ISO 25178-2:2012, and
wherein the coated glazing exhibits an average haze value of at least 0.47% when tested in accordance with ASTM D1003 - 13.

Surprisingly it has been found that the coated glazing according to the first aspect exhibits reduced incidences of cohesive failures within the coating upon thermal bending and/or toughening operations when compared with known coated glazings. It is postulated that the reduction in cohesive failures is due to the layer adjacent the transparent glass substrate having a modified surface topography.

In the context of the present invention, where a layer is said to be "based on" a particular material or materials, this means that the layer predominantly consists of the corresponding said material or materials, which means typically that it comprises at least about 50 at.% of said material or materials.

In the following discussion of the invention, unless stated to the contrary, the disclosure of alternative values for the upper or lower limit of the permitted range of a parameter, coupled with an indication that one of said values is more highly preferred than the other, is to be construed as an implied statement that each intermediate value of said parameter, lying between the more preferred and the less preferred of said alternatives, is itself preferred to said less preferred value and also to each value lying between said less preferred value and said intermediate value.

Throughout this specification, the term "comprising" or "comprises" means including the component(s) specified but not to the exclusion of the presence of other components. The term "consisting essentially of" or "consists essentially of" means including the components specified but excluding other components except for materials present as impurities, unavoidable materials present as a result of processes used to provide the components, and components added for a purpose other than achieving the technical effect of the invention. Typically, when referring to compositions, a composition consisting essentially of a set of components will comprise less than 5% by weight, typically less than 3% by weight, more typically less than 1% by weight of non-specified components.

The term "consisting of" or "consists of" means including the components specified but excluding other components.

Whenever appropriate, depending upon the context, the use of the term "comprises" or "comprising" may also be taken to include the meaning "consists essentially of" or "consisting essentially of", and also may also be taken to include the meaning "consists of" or "consisting of".

References herein such as "in the range x to y" are meant to include the interpretation "from x to y" and so include the values x and y.

In the context of the present invention a transparent material or a transparent substrate is a material or a substrate that is capable of transmitting visible light so that objects or images situated beyond or behind said material can be distinctly seen through said material or substrate.

In the context of the present invention the "thickness" of a layer is, for any given location at a surface of the layer, represented by the distance through the layer, in the direction of the smallest dimension of the layer, from said location at a surface of the layer to a location at an opposing surface of said layer.

In the context of the present invention a coated glazing is deemed to be "bent" if the coated glazing is angled such that the coated glazing occupies at least two planes that form an angle where said planes meet and/or if the coated glazing is curved such that the coated glazing has a radius of curvature in at least one direction.

Preferably said layer based on an oxide of a metal is a layer based on SnO₂, TiO₂ or aluminium oxide, preferably SnO₂, and wherein said layer based on an oxide of a metalloid is a layer based on SiO₂ or silicon oxynitride, preferably SiO₂, and/or wherein both said layer based on an oxide of a metal and said layer based on an oxide of a metalloid are present, and wherein the transparent glass substrate is adjacent the layer based on an oxide of a metal and the layer based on an oxide of a metalloid is adjacent the further layer.

When both said layer based on an oxide of a metal and said layer based on an oxide of a metalloid are present, preferably the transparent glass substrate is adjacent the layer based on an oxide of a metal and the layer based on an oxide of a metalloid is adjacent the further layer. More preferably the transparent glass substrate is adjacent a layer based on SnO₂ and a layer based on SiO₂ is adjacent the further layer.

Preferably said layer based on an oxide of a metal is in direct contact with said glass substrate. Preferably said layer based on an oxide of a metal is in direct contact with said layer based on an oxide of a metalloid. Most preferably said layer based on an oxide of a metal is in direct contact with both said glass substrate and said layer based on an oxide of a metalloid. Preferably said layer based on an oxide of a metalloid is in direct contact with said further layer. Preferably said further layer is the outermost layer of the coated glazing.

Preferably at least a portion of said layer that is adjacent said transparent glass substrate has a thickness of at least 35 nm, more preferably at least 36 nm, even more preferably at least 40 nm, most preferably at least 45 nm, but preferably at most 100 nm, more preferably at most 80 nm, even more preferably at most 70 nm, most preferably at most 60 nm. These preferred thicknesses may be advantageous in assisting with the reduction of the frequency of cohesive failures within the coating upon thermal bending and/or toughening operations.

Preferably at least 50%, more preferably at least 70%, even more preferably at least 80%, even more preferably at least 90% of said layer that is adjacent said transparent glass substrate has a thickness of at least 35 nm. Preferably at least 50%, more preferably at least 70%, even more preferably at least 80%, even more preferably at least 90% of said layer that is adjacent said transparent glass substrate has a thickness of at least 36 nm. Preferably at least 50%, more preferably at least 70%, even more preferably at least 80%, even more preferably at least 90% of said layer that is adjacent said transparent glass substrate has a thickness of at least 40 nm. Preferably at least 50%, more preferably at least 70%, even more preferably at least 80%, even more preferably at least 90% of said layer that is adjacent said transparent glass substrate has a thickness of at least 45 nm. Preferably at least 50%, more preferably at least 70%, even more preferably at least 80%, even more preferably at least 90% of said layer that is adjacent said transparent glass substrate has a thickness of at least 50 nm.

When both said layer based on an oxide of a metal and said layer based on an oxide of a metalloid are present, one of these layers is adjacent said further layer, and preferably at least a portion of said layer that is adjacent said further layer has a thickness of at least 10 nm, more preferably at least 15 nm, even more preferably at least 17 nm, most preferably at least 19 nm, but preferably at most 40 nm, more preferably at most 30 nm, even more preferably at most 25 nm, most preferably at most 23 nm.

Preferably said further layer is a layer based on a transparent conductive oxide (TCO). Preferably the TCO is one or more of fluorine doped tin oxide (SnO₂:F), zinc oxide doped with aluminium, gallium or boron (ZnO:AI, ZnO:Ga, ZnO:B), indium oxide doped with tin (ITO), cadmium stannate, ITO:ZnO, ITO:Ti, In₂O₃, In₂O₃-ZnO (IZO), In₂O₃:Ti, In₂O₃:Mo, In₂O₃:Ga, In₂O₃:W, In₂O₃:Zr, In₂O₃:Nb, In₂₋₂ₓMₓSnₓO₃ with M being Zn or Cu, ZnO:F, Zn_{0.9}Mg_{0.1}O:Ga, and (Zn,Mg)O:P, ITO:Fe, SnO₂:Co, In₂O₃:Ni, In₂O₃:(Sn,Ni), ZnO:Mn, and ZnO:Co. Most preferably said further layer is based on fluorine doped tin oxide (SnO₂:F).

Preferably said further layer has a thickness of at least 200 nm, more preferably at least 250 nm, even more preferably at least 330 nm, most preferably at least 450 nm, but preferably at most 900 nm, more preferably at most 800 nm, even more preferably at most 700 nm, most preferably at most 500 nm.

Preferably said layer that is adjacent said transparent glass substrate comprises a surface that, prior to a coating of said surface, has an arithmetical mean height of the surface value, Sa, of at least 4.5 nm, more preferably at least 5.0 nm, even more preferably at least 5.5 nm, even more preferably at least 6.0 nm, most preferably at least 6.5 nm, but preferably at most 20 nm, more preferably at most 15 nm, even more preferably at most 13 nm, most preferably at most 11 nm. Sa gives an indication of the roughness of a surface and is measured in accordance with ISO 25178-2:2012 Geometrical product specifications (GPS) -- Surface texture: Areal - Part 2: Terms, definitions and surface texture parameters. A layer adjacent the substrate having a rougher surface appears beneficial in reducing incidences of cohesive failure within the coating upon thermal bending and/or toughening operations. The roughness of the layer adjacent the substrate largely dictates the roughness of the surfaces of subsequently deposited layers.

Preferably the coated glazing comprises an outermost layer (i.e. a layer that is furthest from the transparent glass substrate) wherein said outermost layer comprises a surface that has an arithmetical mean height of the surface value, Sa, of at least 12.5 nm, more preferably at least 13.5 nm, even more preferably at least 14.5 nm, even more preferably at least 15.5 nm, most preferably at least 16.0 nm, but preferably at most 45 nm, more preferably at most 30 nm, even more preferably at most 25 nm, most preferably at most 21 nm. Again, a rougher outer surface appears beneficial in reducing incidences of cohesive failure within the coating upon thermal bending and/or toughening operations. Preferably said outermost layer is said further layer.

Preferably the coated glazing exhibits an average haze value of at least 0.5%, more preferably at least 0.6%, even more preferably at least 0.7%, most preferably at least 0.8%, but preferably at most 3.0%, more preferably at most 2.0%, even more preferably at most 1.5%, most preferably at most 1.3% when tested in accordance with ASTM D1003 - 13.

Preferably the coated glazing comprises, more preferably consists of, at least the following layers in sequence:
a transparent glass substrate,
a layer based on an oxide of a metal that is a layer based on SnO₂,
a layer based on an oxide of a metalloid that is a layer based on SiO₂, and
a further layer that is a layer based on fluorine doped tin oxide (SnO₂:F),
wherein said layer that is adjacent said transparent glass substrate comprises a surface that, prior to a coating of said surface, has an arithmetical mean height of the surface value, Sa, of at least 4.5 nm when tested in accordance with ISO 25178-2:2012, and
wherein the coated glazing exhibits an average haze value of at least 0.50% when tested in accordance with ASTM D1003 - 13.

The transparent glass substrate may be a clear metal oxide-based glass pane. Preferably the glass pane is a clear float glass pane, preferably a low iron float glass pane. By clear float glass, it is meant a glass having a composition as defined in BS EN 572-1 and BS EN 572-2 (2004). For clear float glass, the Fe₂O₃ level by weight is typically 0.11%. Float glass with an Fe₂O₃ content less than about 0.05% by weight is typically referred to as low iron float glass. Such glass usually has the same basic composition of the other component oxides i.e. low iron float glass is also a soda-lime-silicate glass, as is clear float glass. Typically low iron float glass has less than 0.02% by weight Fe₂O₃. Alternatively the glass pane is a borosilicate-based glass pane, an alkali-aluminosilicate-based glass pane, or an aluminium oxide-based crystal glass pane.

The coated glazing may be toughened to an extent by any suitable means such as a thermal and/or chemical toughening process. The coated glazing may be bent by an appropriate means such as a press bending, sag bending or roller-forming operation. The coated glazing may be bent in one or more directions. Preferably the radius of curvature in at least one of the one or more directions is between 100mm and 20000mm, more preferably between 200mm and 10000mm, even more preferably between 300mm and 8000mm.

Preferably the coated glazing is a retail storefront glazing, a showroom glazing or a refrigeration glazing.

According to a second aspect of the present invention there is provided a method of manufacture of a coated glazing according to the first aspect comprising the following steps in sequence:
a) providing a transparent glass substrate,
b) depositing at least the following layers in sequence directly or indirectly on a surface of the transparent glass substrate:
   i) a layer based on an oxide of a metal and/or a layer based on an oxide of a metalloid, and
   ii) a further layer.

Preferably said surface of the transparent glass substrate is a major surface of the transparent glass substrate.

Said layer based on an oxide of a metal, said layer based on an oxide of a metalloid and said further layer may each have any feature of the correspondingly named layers according to the first aspect of the present invention.

Preferably said layer based on an oxide of a metal is a layer based on SnO₂, TiO₂ or aluminium oxide, preferably SnO₂,and wherein said layer based on an oxide of a metalloid is a layer based on SiO₂ or silicon oxynitride, preferably SiO₂, and/or wherein both said layer based on an oxide of a metal and said layer based on an oxide of a metalloid are present, and wherein the transparent glass substrate is adjacent the layer based on an oxide of a metal and the layer based on an oxide of a metalloid is adjacent the further layer. Preferably said layer based on an oxide of a metalloid is a layer based on SiO₂ or silicon oxynitride, more preferably SiO₂. Preferably said further layer is a layer based on a transparent conductive oxide (TCO). Most preferably said further layer is based on fluorine doped tin oxide (SnO₂:F).

Preferably said layer based on an oxide of a metal or said layer based on an oxide of a metalloid is deposited directly on a surface of the transparent glass substrate. More preferably said layer based on an oxide of a metal is deposited directly on a surface of the transparent glass substrate.

Preferably step b) i) comprises deposition in sequence of a layer based on an oxide of a metal followed by a layer based on an oxide of a metalloid on a surface of the transparent glass substrate. Preferably said layer based on an oxide of a metalloid is deposited directly on a surface of said layer based on an oxide of a metal.

Preferably said further layer is deposited directly on a surface of said layer based on an oxide of a metal or said layer based on an oxide of a metalloid. More preferably said further layer is deposited directly on a surface of said layer based on an oxide of a metalloid.

Preferably step b) i) is carried out using Chemical Vapour Deposition (CVD). Preferably both steps b) i) and b) ii) are carried out using CVD. Preferably step b) i) is carried out using CVD, preferably wherein both steps b) i) and b) ii) are carried out using CVD, and/or wherein step b) i) is carried out when the transparent glass substrate is at a temperature of at least 690°C, preferably at least 715°C, more preferably at least 725°C, most preferably at least 730°C. In some alternative embodiments it may be advantageous for step b) ii) to be carried out using physical vapour deposition (PVD).

The CVD may be carried out in conjunction with the manufacture of the transparent glass substrate. In an embodiment, the transparent glass substrate may be formed utilizing the well-known float glass manufacturing process. In this embodiment, the transparent glass substrate may also be referred to as a glass ribbon. Conveniently the CVD may be carried out either in the float bath, in the lehr or in the lehr gap. The preferred method of CVD is atmospheric pressure CVD (e.g. online CVD as performed during the float glass process). However, it should be appreciated that the CVD process can be utilised apart from the float glass manufacturing process or well after formation and cutting of the glass ribbon.

The CVD may preferably be carried out when the transparent glass substrate is at a temperature in the range 450°C to 800°C, more preferably when the transparent glass substrate is at a temperature in the range 550°C to 750°C. Depositing a CVD coating when the transparent glass substrate is at these preferred temperatures affords greater crystallinity of the coating, which can improve toughenability (resistance to heat treatment).

Preferably step b) i) is carried out when the transparent glass substrate is at a temperature of at least 690°C, more preferably at least 715°C, even more preferably at least 725°C, most preferably at least 730°C, but preferably at most 790°C, more preferably at most 760°C, even more preferably at most 750°C, most preferably at most 745°C. Preferably said deposition of the layer based on an oxide of a metal in step b) i) is carried out when the transparent glass substrate is at a temperature of at least 690°C, more preferably at least 715°C, even more preferably at least 725°C, most preferably at least 730°C, but preferably at most 790°C, more preferably at most 760°C, even more preferably at most 750°C, most preferably at most 745°C.

In some preferred embodiments the deposition of the layer based on an oxide of a metalloid in step b) i) is carried out when the transparent glass substrate is at a temperature of at least 650°C, more preferably at least 680°C, even more preferably at least 690°C, most preferably at least 695°C, but preferably at most 750°C, more preferably at most 730°C, even more preferably at most 720°C, most preferably at most 710°C.

Preferably the deposition of the further layer in step b) ii) is carried out when the transparent glass substrate is at a temperature of at least 600°C, more preferably at least 620°C, even more preferably at least 630°C, most preferably at least 640°C, but preferably at most 720°C, more preferably at most 700°C, even more preferably at most 680°C, most preferably at most 650°C.

In certain embodiments, the CVD process is a dynamic process in which the transparent glass substrate is moving at the time of etching or coating. Preferably, the transparent glass substrate moves at a predetermined rate of, for example, greater than 3m/min during step b) i) and/or step b) ii). More preferably the transparent glass substrate is moving at a rate of between 3m/min and 20 m/min during step b) i) and/or step b) ii).

As detailed above, preferably the CVD may be carried out during the float glass production process at substantially atmospheric pressure. Alternatively the CVD may be carried out using low-pressure CVD or ultrahigh vacuum CVD. The CVD may be carried out using aerosol assisted CVD or direct liquid injection CVD. Furthermore, the CVD may be carried out using microwave plasma-assisted CVD, plasma-enhanced CVD, remote plasma-enhanced CVD, atomic layer CVD, combustion CVD (flame pyrolysis), hot wire CVD, metalorganic CVD, rapid thermal CVD, vapour phase epitaxy, or photo-initiated CVD. The glass substrate will usually be cut into sheets after deposition of any CVD coating(s) in step b) i) and/or step b) ii) (and before deposition of any PVD coatings) for storage or convenient transport from the float glass production facility to a vacuum deposition facility.

The CVD may also comprise forming one or more gaseous mixture. As would be appreciated by those skilled in the art, precursor compounds suitable for use in the gaseous mixture should be suitable for use in a CVD process. Such compounds may at some point be a liquid or a solid but are volatile such that they can be vaporised for use in a gaseous mixture. Once in a gaseous state, the precursor compounds can be included in a gaseous stream and utilized in a CVD process to carry out step b) i) and/or step b) ii). For any particular combination of gaseous precursor compounds, the optimum concentrations and flow rates for achieving a particular deposition rate and coating thickness may vary.

A gaseous mixture may comprise one or more precursor compound and a carrier gas or diluents, for example, nitrogen, air and/or helium, preferably nitrogen. The precursor compounds may be mixed without undergoing ignition and premature reaction. Thus, in certain embodiments, the CVD process comprises mixing the precursor compounds to form a gaseous mixture.

For the deposition of SnO₂ via CVD the gaseous mixture preferably comprises dimethyl tin dichloride (DMT), oxygen and steam. The same gaseous mixture can be used to deposit SnO₂:F provided a source of flurorine is added, such as HF or trifluoroacetic acid. For the deposition of SiO₂ the gaseous mixture may comprise silane (SiH₄), ethylene (C₂H₄) and oxygen. For the deposition of titania the gaseous mixture may comprise titanium tetrachloride (TiCl₄) and ethyl acetate (EtOAc). Preferably the gaseous mixtures comprise nitrogen. In some embodiments the gaseous mixture may also comprise helium.

In certain embodiments, one or more gaseous mixture is fed through a coating apparatus and discharged from the coating apparatus utilizing one or more gas distributor beams prior to deposition of the layers in steps b) i) and b) ii). Preferably, the one or more gaseous mixture is formed prior to being fed through the coating apparatus. For example, the precursor compounds may be mixed in a feed line connected to an inlet of the coating apparatus. In other embodiments, one or more gaseous mixture may be formed within the coating apparatus.

One or more gaseous mixture may be directed toward and along the transparent glass substrate. Utilising a coating apparatus aids in directing the gaseous mixture toward and along the transparent glass substrate. Preferably, the gaseous mixture is directed toward and along the transparent glass substrate in a laminar flow.

Preferably, the coating apparatus extends transversely across the transparent glass substrate and is provided at a predetermined distance thereabove. The coating apparatus is preferably located at, at least, one predetermined location. When the CVD process is utilised in conjunction with the float glass manufacturing process, the coating apparatus is preferably provided within the float bath section thereof. However, the coating apparatus may be provided in the annealing lehr, and/or in the gap between the float bath and the annealing lehr.

It is desirable that the one or more gaseous mixture be kept at a temperature below the thermal decomposition temperature of the precursor compounds to prevent pre-reaction before the mixture reaches the surface of the transparent glass substrate. Within the coating apparatus, the gaseous mixture is maintained at a temperature below that at which it reacts and is delivered to a location near the surface of the glass substrate, the glass substrate being at a temperature above the reaction temperature. The gaseous mixtures react at or near the surface of the glass substrate to form the desired layers thereover. The CVD process results in the deposition of a high quality coating on the glass substrate.

Preferably the surface of the transparent glass substrate that is coated is the gas side surface. Coated glass manufacturers usually prefer depositing coatings on the gas side surface (as opposed to the tin side surface for float glass) because deposition on the gas side surface can improve the properties of the coating.

Preferably any PVD utilised in step b) ii) is carried out by sputter deposition. It is particularly preferred that the PVD is magnetron cathode sputtering, either in the DC mode, in the pulsed mode, in the medium or radio frequency mode or in any other suitable mode, whereby metallic or semiconducting targets are sputtered reactively or non-reactively in a suitable sputtering atmosphere. Depending on the materials to be sputtered, planar or rotating tubular targets may be used. The coating process is preferably carried out by setting up suitable coating conditions such that any oxygen (or nitrogen) deficit of any oxide (or nitride) layer of any layers of the coating is kept low to achieve a high stability of the visible light transmittance and colour of the coated glazing, particularly during a heat treatment.

Preferably the method further comprises, following step b) ii), bending the coated glazing. The coated glazing may be bent by an appropriate means such as a press bending, sag bending or roller-forming operation. Preferably the coated glazing is bent such that said layers deposited on a surface of the transparent glass substrate are located on a concave side of the bent coated glazing. Alternatively or additionally the method further comprises toughening the glazing to an extent by any suitable means such as a thermal and/or chemical toughening process.

According to a third aspect of the present invention there is provided the use of the coated glazing according to the first aspect as a retail storefront glazing, a showroom glazing or a refrigeration glazing.

According to a fourth aspect of the present invention there is provided a coated glazing consisting of the following layers:
a transparent glass substrate, and
a base layer based on an oxide of a metal or based on an oxide of a metalloid,
wherein said base layer comprises a surface that has an arithmetical mean height of the surface value, Sa, of at least 4.0 nm when tested in accordance with ISO 25178-2:2012.

The coated glazing of the fourth aspect is an intermediate product in the formation of the coated glazing of the first aspect.

Preferably said base layer comprises a surface that has an arithmetical mean height of the surface value, Sa, of at least 4.5 nm, more preferably at least 5.0 nm, even more preferably at least 5.5 nm, even more preferably at least 6.0 nm, most preferably at least 6.5 nm, but preferably at most 20 nm, more preferably at most 15 nm, even more preferably at most 13 nm, most preferably at most 11 nm. Sa gives an indication of the roughness of a surface and is measured in accordance with ISO 25178-2:2012 Geometrical product specifications (GPS)- Surface texture: Areal - Part 2: Terms, definitions and surface texture parameters.

Preferably the coated glazing exhibits an average haze value of at least 0.47%, more preferably at least 0.5%, more preferably at least 0.6%, even more preferably at least 0.7%, most preferably at least 0.8%, but preferably at most 3.0%, more preferably at most 2.0%, even more preferably at most 1.5%, most preferably at most 1.3% when tested in accordance with ASTM D1003 - 13.

According to a fifth aspect of the present invention there is provided a coated glazing comprising at least the following layers in sequence:
a transparent glass substrate,
a layer based on an oxide of a metal and/or a layer based on an oxide of a metalloid, and
a further layer,
wherein either said layer based on an oxide of a metal or said layer based on an oxide of a metalloid is adjacent said transparent glass substrate,
wherein the coated glazing comprises an outermost layer (i.e. a layer that is furthest from the transparent glass substrate) wherein said outermost layer comprises a surface that has an arithmetical mean height of the surface value, Sa, of at least 15.5 nm when tested in accordance with ISO 25178-2:2012, and
wherein the coated glazing exhibits an average haze value of at least 0.47% when tested in accordance with ASTM D1003 - 13.

Surprisingly it has been found that the coated glazing according to the fifth aspect exhibits reduced incidences of cohesive failures within the coating upon thermal bending and/or toughening operations when compared with known coated glazings.

Preferably said outermost layer comprises a surface that has an arithmetical mean height of the surface value, Sa, of at least 16.0 nm, but preferably at most 45 nm, more preferably at most 30 nm, even more preferably at most 25 nm, most preferably at most 21 nm. A rougher surface appears beneficial in reducing incidences of cohesive failure within the coating upon thermal bending and/or toughening operations. Preferably said outermost layer is said further layer.

According to a sixth aspect of the present invention there is provided a coated glazing comprising at least the following layers in sequence:
a transparent glass substrate,
a layer based on an oxide of a metal and/or a layer based on an oxide of a metalloid, and
a further layer,
wherein either said layer based on an oxide of a metal or said layer based on an oxide of a metalloid is adjacent said transparent glass substrate,
wherein at least a portion of said layer that is adjacent said transparent glass substrate has a thickness of at least 35 nm, and
wherein the coated glazing exhibits an average haze value of at least 0.47% when tested in accordance with ASTM D1003 - 13.

Any invention described herein may be combined with any feature of any other invention described herein *mutatis mutandis.*

It will be appreciated that optional features applicable to one aspect of the invention can be used in any combination, and in any number. Moreover, they can also be used with any of the other aspects of the invention in any combination and in any number. This includes, but is not limited to, the dependent claims from any claim being used as dependent claims for any other claim in the claims of this application.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention will now be further described by way of the following specific embodiments, which are given by way of illustration and not of limitation, with reference to the accompanying drawings in which:
**Fig. 1** is a schematic view, in cross-section, of a coated glazing in accordance with certain embodiments of the present invention;
**Fig. 2** is a schematic view, in cross-section, of a bent coated glazing in accordance with certain embodiments of the present invention;
**Fig. 3** is a schematic plan view of the bent coated glazing shown in Fig. 2;
**Fig. 4** is a schematic view, in vertical section, of an installation for practicing the float glass process which incorporates several CVD apparatuses for manufacturing a coated glazing in accordance with certain embodiments of the present invention;
**Fig. 5** is a photograph of Comparative Example 1 coated glazing that has been bent and tested for humidity resistance;
**Fig. 6** is a photograph of Example 6 coated glazing of the present invention that has been bent and tested for humidity resistance;
**Fig. 7** is a photograph of Comparative Example 2 coated glazing that has been bent and tested for humidity resistance; and
**Figs. 8-12** are respectively photographs of Examples 10-14 coated glazings of the present invention that have been bent and tested for humidity resistance.

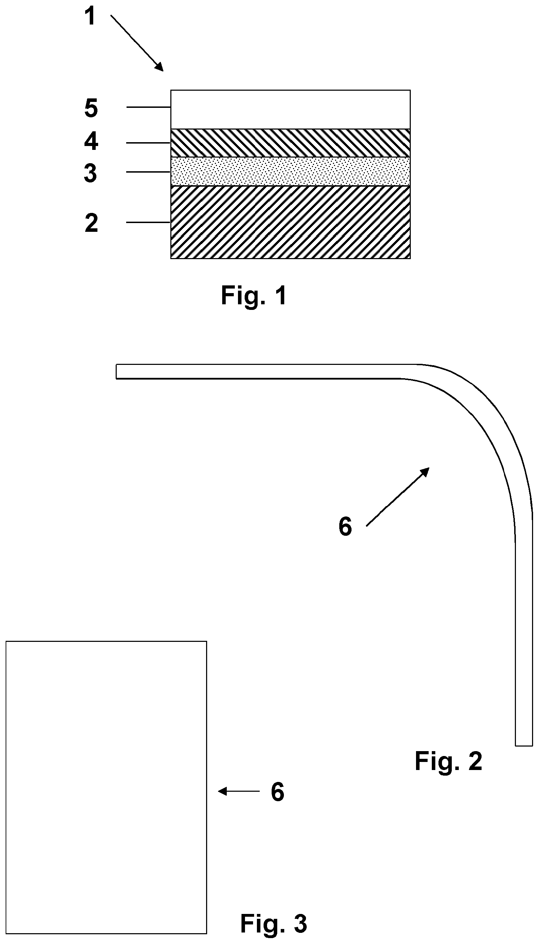

Figure 1 shows a cross-section of a coated glazing 1 according to certain embodiments of the present invention. Coated glazing 1 comprises a transparent float glass substrate 2 that has been sequentially coated using CVD with a layer based on SnO₂ 3, a layer based on SiO₂ 4 and a layer based on fluorine doped tin oxide (SnO₂:F) 5.

Figure 2 depicts a cross-section of a bent coated glazing 6 in accordance with certain embodiments of the present invention. Bent coated glazing 6 has the same structure as coated glazing 1 shown in Figure 1 but bent coated glazing 6 has subsequently been bent in a press bending process to achieve a curved right angle. Figure 3 shows that bent coated glazing 6 has a rectangular outline when observed in plan view.

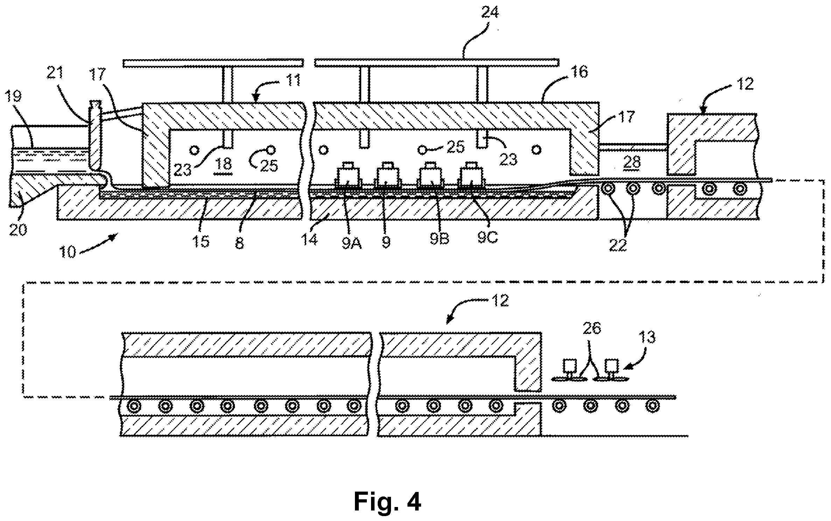

As discussed above, the CVD process may be carried out in conjunction with the manufacture of the glass substrate in the float glass process. The float glass process is typically carried out utilizing a float glass installation such as the installation 10 depicted in Figure 4. However, it should be understood that the float glass installation 10 described herein is only illustrative of such installations.

As illustrated in Figure 4, the float glass installation 10 may comprise a canal section 20 along which molten glass 19 is delivered from a melting furnace, to a float bath section 11 wherein the glass substrate is formed. In this embodiment, the glass substrate will be referred to as a glass ribbon 8. However, it should be appreciated that the glass substrate is not limited to being a glass ribbon. The glass ribbon 8 advances from the bath section 11 through an adjacent annealing lehr 12 and a cooling section 13. The float bath section 11 includes: a bottom section 14 within which a bath of molten tin 15 is contained, a roof 16, opposite side walls (not depicted) and end walls 17. The roof 16, side walls and end walls 17 together define an enclosure 18 in which a non-oxidizing atmosphere is maintained to prevent oxidation of the molten tin 15.

In operation, the molten glass 19 flows along the canal 20 beneath a regulating tweel 21 and downwardly onto the surface of the tin bath 15 in controlled amounts. On the molten tin surface, the molten glass 19 spreads laterally under the influence of gravity and surface tension, as well as certain mechanical influences, and it is advanced across the tin bath 15 to form the glass ribbon 8. The glass ribbon 8 is removed from the bath section 11 over lift out rolls 22 and is thereafter conveyed through the annealing lehr 12 and the cooling section 13 on aligned rolls. The deposition of coatings preferably takes place in the float bath section 11, although it may be possible for deposition to take place further along the glass production line, for example, in the gap 28 between the float bath 11 and the annealing lehr 12, or in the annealing lehr 12.

As illustrated in Figure 4, four CVD apparatuses 9, 9A, 9B, 9C are shown within the float bath section 11. Thus, depending on the frequency and thickness of the coating layers required it may be desirable to use some or all of the CVD apparatuses 9, 9A, 9B, 9C. One or more additional coating apparatuses (not depicted) may be provided. One or more CVD apparatus may alternatively or additionally be located in the lehr gap 28. Any by-products are removed through coater extraction slots and then through a pollution control plant. For example, in an embodiment, a tin oxide coating is formed utilizing using CVD apparatus 9A, a silica coating is formed utilizing CVD apparatus 9, and adjacent apparatuses 9B and 9C are utilized to form a fluorine doped tin oxide coating.

A suitable non-oxidizing atmosphere, generally nitrogen or a mixture of nitrogen and hydrogen in which nitrogen predominates, is maintained in the float bath section 11 to prevent oxidation of the molten tin 15 comprising the float bath. The atmosphere gas is admitted through conduits 23 operably coupled to a distribution manifold 24. The non-oxidizing gas is introduced at a rate sufficient to compensate for normal losses and maintain a slight positive pressure, on the order of between about 0.001 and about 0.01 atmosphere above ambient atmospheric pressure, so as to prevent infiltration of outside atmosphere. For the purposes of describing the invention, the above-noted pressure range is considered to constitute normal atmospheric pressure.

The CVD of coating layers is generally performed at essentially atmospheric pressure. Thus, the pressure of the float bath section 11, annealing lehr 12, and/or in the gap 28 between the float bath 11 and the annealing lehr 12 may be essentially atmospheric pressure. Heat for maintaining the desired temperature regime in the float bath section 11 and the enclosure 18 is provided by radiant heaters 25 within the enclosure 18. The atmosphere within the lehr 12 is typically atmospheric air, as the cooling section 13 is not enclosed and the glass ribbon 8 is therefore open to the ambient atmosphere. The glass ribbon 8 is subsequently allowed to cool to ambient temperature. To cool the glass ribbon 8, ambient air may be directed against the glass ribbon 8 by fans 26 in the cooling section 13. Heaters (not shown) may also be provided within the annealing lehr 12 for causing the temperature of the glass ribbon 8 to be gradually reduced in accordance with a predetermined regime as it is conveyed therethrough.

### Examples

### Thickness and Haze Measurements of Coated Glazings

All layer depositions were carried out using CVD. All Examples shown in Table 1 below were produced on a float line using a 4mm soda-lime-silica glass substrate. Comparative Examples 1-3 were coated at an average line speed of 13.3 m/min, while Examples 4-6 were coated at an average line speed of 8.3 m/min. The deposition of the base layer of SnO₂ was carried out at a glass temperature of 700 °C for Comparative Examples 1-3 and 720 °C for Examples 4-6.

A SnO₂ layer was deposited over the glass surface using a single coater with the following components:
- N₂ carrier gas, O₂, dimethyltin dichloride, and H₂O.

A SiO₂ layer was deposited over the glass surface using a single coater with the following components:
- N₂ carrier gas, He carrier gas, O₂, C₂H₄, and SiH₄.

A SnO₂:F layer was deposited over the glass surface using two coaters for each of Comparative Examples 1-3 and Examples 4-6 with the following components:
- N₂ carrier gas, O₂, dimethyltin dichloride, HF, and H₂O.

The layer thicknesses of the Examples were determined by SEM. The haze values of the Examples were measured in accordance with the ASTM D1003 - 13 standard using a BYK-Gardner Hazemeter.

**Table 1: Layer thicknesses and haze values for Comparative Examples and Examples of the present invention.**

| **Example** | **SnO₂ layer thickness (nm)** | **SiO₂ layer thickness (nm)** | **SnO₂:F layer thickness (nm)** | **Average Haze (%)** |
|---|---|---|---|---|
| **Comparative Example 1** | 34 | 22 | 372 | 0.45 |
| **Comparative Example 2** | 34 | 22 | 372 | 0.45 |
| **Comparative Example 3** | 34 | 22 | 372 | 0.46 |
| **Example 4** | 36 | 22 | 359 | 0.62 |
| **Example 5** | 36 | 19 | 325 | 0.56 |
| **Example 6** | 40 | 22 | 341 | 0.57 |

### Press Bending and Humidity Testing of Coated Glazings

All of the above Examples were then press bent to produce bent coated glazings with a low radius of curvature (<600mm). Each Example was prepared for bending by cutting to size (approximately 550x550mm) and edge working the cut edges (to reduce their sharpness (for safety reasons), to generally reduce the risk of fracture originating from the edge, and/or for aesthetic reasons). The edge working was an abrasive machining process involving edgegrinding and/or polishing. The Example was then washed and a heating furnace was used to heat each Example from room temperature to >600°C. With the coating on the concave side of the prospective shape, each Example was then press bent to achieve the same curvature. The Examples were then toughened by an air quenching step.

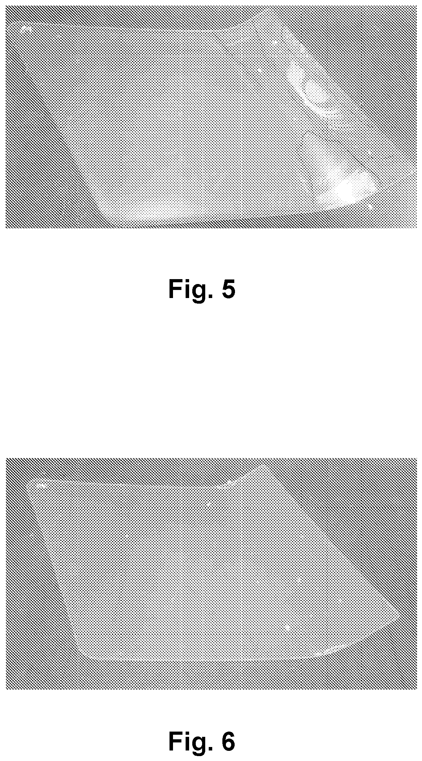

Next the resistance of the bent Examples to humidity was tested. The bent Examples were exposed to humid, ambient conditions (exposure to 95% relative humidity (rh), at 40°C, for >7days) using a humidity cabinet and the incidence of cohesive failure within the coating was observed. In every case Comparative Examples 1-3 suffered greater incidences of cohesive failure than Examples 4-6 of the present invention. Figure 5 shows a photograph of Comparative Example 1 after the humidity test. The areas of cohesive failure have been marked with a black pen and are clearly visible as paler regions. The observed cohesive failure generally occurred at the interface between the SiO₂ and SnO₂:F layers. In contrast, the Examples of the present invention exhibited very little cohesive failure within the coating after the humidity test, as shown in the photograph of Example 6 in Figure 6 which shows a very small patch of cohesive failure in the bend.

### Analysis of Surface Topography of Coated Glazings

Three further sets of Examples (7a-7c, 8a-8c and 9a-9c) of coated glazings were prepared, in order to investigate the surface topography of the layers. Examples 7a, 8a and 9a were coated with a base layer of SnO₂ only. Examples 7b, 8b and 9b were coated with a base layer of SnO₂ and a top layer of SiO₂. Examples 7c, 8c and 9c were coated with a base layer of SnO₂, a middle layer of SiO₂ and a top layer of SnO₂:F. Examples 7a-7c, 8a-8c and 9a-9c were prepared in the same manner as Comparative Examples 1-3 and Examples 4-6 (except Examples 7a-b, 8a-b and 9a-b were coated with fewer layers before they were analysed). In addition, the deposition of the base layer of SnO₂ was carried out at a glass temperature of 720 °C for Examples 7a-c and at a glass temperature of 735 °C for Examples 8a-c and 9a-c. Also, immediately prior to the deposition of the top layer of SnO₂:F in Example 8c the coated glazing was cooled to test the effect on roughness and haze.

Examples 7a-7c, 8a-8c and 9a-9c were then analysed by atomic force microscopy (AFM) and the haze values of Examples 7c, 8c and 9c were measured in accordance with the ASTM D1003 - 13 standard using a BYK-Gardner Hazemeter.

For the AFM a small section (approximately 4cm²) of coated glass was removed from each of the Examples. In order to eliminate any superficial contamination from the coated surfaces, the Examples were cleaned by sonicating in methanol for approximately 60 seconds, and dried with a compressed gas duster. Following cleaning, the Examples were placed directly onto the AFM instrument stage, and secured to the stage using the instrument's internal vacuum system, in readiness for analysis.

Atomic Force Microscopy is a technique which uses a cantilever incorporating a small sharp tip (approximately 2-20nm in radius) to physically measure surface topography in the nm height range and nm to µm lateral range. AFM instruments are generally equipped with several modes of operation, of which the following are examples:

### TappingMode^{™}

This is a mode in which the cantilever is oscillated at, or near to, its resonant frequency, lightly tapping the surface under investigation. The cantilever's oscillation amplitude changes with proximity to the sample surface, and the topography image is obtained by the system monitoring these changes. The TESPA AFM probes used for this technique have a nominal tip radius of 8nm.

### PeakForce Tapping^{™} with ScanAsyst^{™} (PFTSA)

An imaging technique in which the AFM cantilever is brought in and out of contact with the surface, oscillating at well below its resonant frequency. This mode performs a very fast force curve at every pixel in the image. The peak force of each of these curves is then used as the imaging feedback signal, providing direct force control. This allows it to operate at even lower forces than *TappingMode*^{™}, which helps protect delicate samples and tips.

*ScanAsyst*^{™} is a PFT variant which utilises intelligent algorithms to automatically optimise all imaging parameters. The SCANASYST-AIR probes used for this technique have a nominal tip radius of 2nm.

The Examples were analysed over regions of 500 x 500nm, 1 × 1µm (twice), and 5 x 5µm. The 1 × 1µm and 5 × 5µm scans were undertaken with the Dimension Icon AFM in the Peak Force Tapping mode of operation, incorporating ScanAsyst (PFTSA). This mode of imaging uses a probe consisting of a silicon nitride cantilever with a silicon tip (radius ~2nm), which is smaller than the tips used in conventional Tapping Mode (tip radius -8nm). The 500 x 500nm scans were undertaken using soft Tapping Mode. PFTSA images were collected as 'height sensor' and 'peak force error' simultaneously, whereas the Tapping Mode images were acquired as 'height sensor' and amplitude error'.

### Data analysis

NanoScope Analysis version 1.40 software was employed to flatten the raw data (to remove sample tilt) and analyse the data for the following 3D areal roughness parameter:
▪ Sa - arithmetical mean height - Expresses the difference in height of each point compared to the arithmetical mean of the surface. This parameter is used generally to evaluate surface roughness.

Sa was measured in accordance with ISO 25178-2:2012 Geometrical product specifications (GPS) -- Surface texture: Areal - Part 2: Terms, definitions and surface texture parameters. An average was taken of the four Sa values for each Example.

**Table 2: Average Sa and average haze for a number of Examples**

| **Glass/SnO₂ Average Sa (nm)** | /**SiO₂ Average Sa** | **Glass/SnO₂/SiO₂/SnO₂:F Average Sa (nm)** | **Glass/SnO₂/SiO₂/SnO₂:F Average Haze (%)** |
|---|---|---|---|
| Example 7a 5.6 | Example 7b 4.6 | Example 7c 14.0 | Example 7c 0.52 |
| Example 8a 6.4 | Example 8b 5.5 | Example 8c 14.9 | Example 8c 0.70 |
| Example 9a Not Tested | Example 9b Not Tested | Example 9c 16.0 | Example 9c 0.90 |

Table 2 shows that Example 8a has a rougher base layer surface than that of Example 7a which it is postulated is due to the higher glass substrate temperature employed with Example 8a. As detailed above, the roughness of the base layer largely dictates the roughness of subsequently deposited layers, although it is worth noting that the cooling carried out prior to the deposition of the top layer in Example 8c resulted in a lower roughness than was obtained without cooling with Example 9c. Table 2 also shows that there is a strong correlation between the roughness of the stack and the haze it exhibits.

### Further Press Bending and Humidity Testing of Coated Glazings

Five further Examples (10-14) were prepared in the same way as Examples 4-6 detailed above. Examples 10-14 were press bent and humidity tested in the same way as Comparative Examples 1-3 and Examples 4-6 detailed above. All of Examples 10-14 had a base layer of SnO₂ that is at least 35nm thick.

Average haze and Sa values of Comparative Examples 1 and 2 and Examples 10-14 were determined in the same way as detailed above and are shown in Table 3 below. For the Sa values an average was taken of the four values measured for the three different scan sizes detailed above in relation to Examples 7a-7c, 8a-8c and 9a-9c. The Sa values represent the arithmetical mean height of the surface of the top layer of SnO₂:F for each example.

A cohesive failure rating of 0-10 was assigned to each example following the humidity testing, with 0 representing no cohesive failure and gradually increasing to 10 representing complete cohesive failure.

**Table 3: Average haze, Average Sa and cohesive failure ratings for Comparative Examples and Examples of the present invention**

| **Example** | **Average Haze (%)** | **Average Sa (nm)** | **Cohesive Failure Rating** |
|---|---|---|---|
| **Comparative Example 1** | 0.45 | 12.7 | 9 |
| **Comparative Example 2** | 0.45 | 13 | 8 |
| **Example 10** | 0.66 | 12.8 | 3 |
| **Example 11** | 0.92 | 16.1 | 1 |
| **Example 12** | 1.11 | 17.4 | 1 |
| **Example 13** | 1.18 | 17.2 | 2 |
| **Example 14** | 0.62 | 15.8 | 4 |

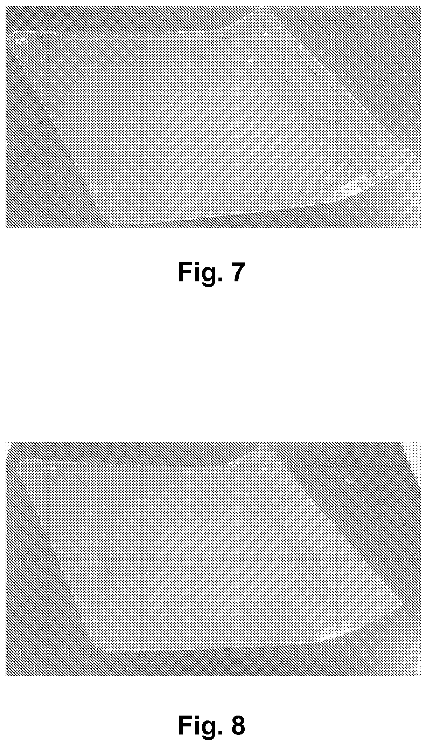

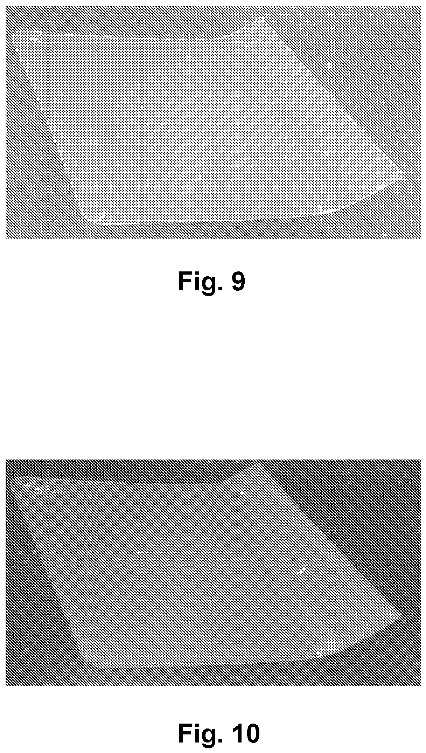

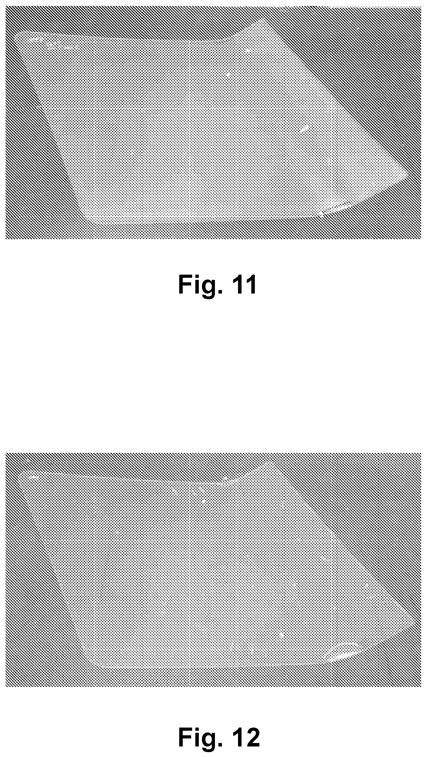

As detailed above, Figure 5 shows a photograph of Comparative Example 1 after the humidity test. Photographs of Comparative Example 2 and Examples 10-14 after the humidity test are shown in Figures 7-12 respectively. As will be noted from Table 3 and the associated figures, in general the cohesive failure rating is inversely proportional to the average haze and the average Sa of the surface of the top layer of SnO₂:F, which of course largely arises from the roughness of the base layer of SnO₂. While an acceptable cohesive failure rating can be achieved at a lower average Sa, an Sa of at least 16 nm is required to achieve the best cohesive failure performance.

The invention is not restricted to the details of the foregoing embodiments. The invention extends to any novel one, or any novel combination, of the features disclosed in this specification (including any accompanying claims, abstract and drawings), or to any novel one, or any novel combination, of the steps of any method or process so disclosed.

## Claims

1. A coated glazing comprising at least the following layers in sequence:
a transparent glass substrate,
a layer based on an oxide of a metal and/or a layer based on an oxide of a metalloid, and
a further layer,
wherein either said layer based on an oxide of a metal or said layer based on an oxide of a metalloid is adjacent said transparent glass substrate,
wherein said layer that is adjacent said transparent glass substrate comprises a surface that, prior to a coating of said surface, has an arithmetical mean height of the surface value, Sa, of at least 4.0 nm when tested in accordance with ISO 25178-2:2012, and
wherein the coated glazing exhibits an average haze value of at least 0.47% when tested in accordance with ASTM D1003 - 13.

2. The coated glazing according to claim 1, wherein said layer based on an oxide of a metal is a layer based on SnO₂, TiO₂ or aluminium oxide, preferably SnO₂, and wherein said layer based on an oxide of a metalloid is a layer based on SiO₂ or silicon oxynitride, preferably SiO₂, and/or wherein both said layer based on an oxide of a metal and said layer based on an oxide of a metalloid are present, and wherein the transparent glass substrate is adjacent the layer based on an oxide of a metal and the layer based on an oxide of a metalloid is adjacent the further layer.

3. The coated glazing according to any preceding claim, wherein at least a portion of said layer that is adjacent said transparent glass substrate has a thickness of at least 35 nm, preferably at least 36 nm, more preferably at least 40 nm, most preferably at least 45 nm.

4. The coated glazing according to any preceding claim, wherein said further layer is a layer based on a transparent conductive oxide (TCO), wherein the TCO is one or more of fluorine doped tin oxide (SnO₂:F), zinc oxide doped with aluminium, gallium or boron (ZnO:AI, ZnO:Ga, ZnO:B), indium oxide doped with tin (ITO), cadmium stannate, ITO:ZnO, ITO:Ti, In₂O₃, In₂O₃-ZnO (IZO), In₂O₃:Ti, In₂O₃:M0, In₂O₃:Ga, In₂O₃:W, In₂O₃:Zr, In₂O₃:Nb, In₂₋₂ₓMₓSnₓO₃ with M being Zn or Cu, ZnO:F, Zn_{0.9}Mg_{0.1}O:Ga, and (Zn,Mg)O:P, ITO:Fe, SnO₂:Co, In₂O₃:Ni, In₂O₃:(Sn,Ni), ZnO:Mn, and ZnO:Co, preferably fluorine doped tin oxide (SnO₂:F).

5. The coated glazing according to any preceding claim, wherein said layer that is adjacent said transparent glass substrate comprises a surface that, prior to a coating of said surface, has an arithmetical mean height of the surface value, Sa, of at least 4.5 nm, more preferably at least 5.0 nm, even more preferably at least 5.5 nm, even more preferably at least 6.0 nm, most preferably at least 6.5 nm.

6. The coated glazing according to any preceding claim, wherein the coated glazing comprises an outermost layer wherein said outermost layer comprises a surface that has an arithmetical mean height of the surface value, Sa, of at least 12.5 nm, preferably at least 13.5 nm, more preferably at least 14.5 nm, even more preferably at least 15.5 nm, most preferably at least 16.0 nm, but preferably at most 45 nm, more preferably at most 30 nm, even more preferably at most 25 nm, most preferably at most 21 nm.

7. The coated glazing according to any preceding claim, wherein the coated glazing exhibits an average haze value of at least 0.5%, preferably at least 0.6%, more preferably at least 0.7%, most preferably at least 0.8% when tested in accordance with ASTM D1003 - 13.

8. The coated glazing according to any preceding claim, wherein the coated glazing comprises, preferably consists of, at least the following layers in sequence:
a transparent glass substrate,
a layer based on an oxide of a metal that is a layer based on SnO₂,
a layer based on an oxide of a metalloid that is a layer based on SiO₂,and
a further layer that is a layer based on fluorine doped tin oxide (SnO₂:F),
wherein said layer that is adjacent said transparent glass substrate comprises a surface that, prior to a coating of said surface, has an arithmetical mean height of the surface value, Sa, of at least 4.5 nm when tested in accordance with ISO 25178-2:2012, and
wherein the coated glazing exhibits an average haze value of at least 0.50% when tested in accordance with ASTM D1003 - 13.

9. A method of manufacture of a coated glazing according to any preceding claim comprising the following steps in sequence:
a) providing a transparent glass substrate,
b) depositing at least the following layers in sequence directly or indirectly on a surface of the transparent glass substrate:
i) a layer based on an oxide of a metal and/or a layer based on an oxide of a metalloid, and
ii) a further layer.

10. The method according to claim 9, wherein step b) i) is carried out using Chemical Vapour Deposition (CVD), preferably wherein both steps b) i) and b) ii) are carried out using CVD, and/or wherein step b) i) is carried out when the transparent glass substrate is at a temperature of at least 690°C, preferably at least 715°C, more preferably at least 725°C, most preferably at least 730°C.

11. The method according to any of claims 9 or 10, wherein said deposition of the layer based on an oxide of a metal in step b) i) is carried out when the transparent glass substrate is at a temperature of at least 690°C, preferably at least 715°C, more preferably at least 725°C, most preferably at least 730°C, but at most 790°C, preferably at most 760°C, more preferably at most 750°C, most preferably at most 745°C.

12. The method according to any of claims 9 to 11, wherein the method further comprises, following step b) ii), bending the coated glazing.

13. Use of the coated glazing according to any of claims 1 to 8 as a retail storefront glazing, a showroom glazing or a refrigeration glazing.

14. A coated glazing consisting of the following layers:
a transparent glass substrate, and
a base layer based on an oxide of a metal or based on an oxide of a metalloid,
wherein said base layer comprises a surface that has an arithmetical mean height of the surface value, Sa, of at least 4.0 nm when tested in accordance with ISO 25178-2:2012.

15. A coated glazing comprising at least the following layers in sequence:
a transparent glass substrate,
a layer based on an oxide of a metal and/or a layer based on an oxide of a metalloid, and
a further layer,
wherein either said layer based on an oxide of a metal or said layer based on an oxide of a metalloid is adjacent said transparent glass substrate,
wherein the coated glazing comprises an outermost layer wherein said outermost layer comprises a surface that has an arithmetical mean height of the surface value, Sa, of at least 15.5 nm when tested in accordance with ISO 25178-2:2012, and
wherein the coated glazing exhibits an average haze value of at least 0.47% when tested in accordance with ASTM D1003 - 13.

## Patentansprüche

1. Beschichtete Verglasung, die nacheinander mindestens folgende Schichten umfasst:
ein transparentes Glassubstrat,
eine Schicht auf der Basis eines Oxids eines Metalls und/oder eine Schicht auf der Basis eines Oxids eines Metalloids, und
eine weitere Schicht,
wobei entweder die Schicht auf der Basis eines Oxids eines Metalls oder die Schicht auf der Basis eines Oxids eines Metalloids an das transparente Glassubstrat angrenzt,
wobei die Schicht, die an das transparente Glassubstrat angrenzt, eine Oberfläche aufweist, die vor einem Beschichten der Oberfläche eine arithmetische mittlere Höhe des Oberflächenwerts, Sa, gemessen nach ISO 25178-2:2012, von mindestens 4,0 nm aufweist, und
wobei die beschichtete Verglasung einen durchschnittlichen Trübungswert, gemessen nach ASTM D1003-13, von mindestens 0,47 % aufweist.

2. Beschichtete Verglasung nach Anspruch 1, bei der die Schicht auf Basis eines Oxids eines Metalls eine Schicht auf Basis von SnO₂, TiO₂ oder Aluminiumoxid, vorzugsweise SnO₂, ist und wobei die Schicht auf Basis eines Oxids eines Metalloids eine Schicht auf Basis von SiO₂ oder Siliziumoxynitrid, vorzugsweise SiO₂,ist, und/oder wobei sowohl die Schicht auf der Basis eines Oxids eines Metalls als auch die Schicht auf der Basis eines Oxids eines Metalloids vorhanden sind, das transparente Glassubstrat an die Schicht auf der Basis eines Oxids eines Metalls angrenzt und die Schicht auf der Basis eines Oxids eines Metalloids an die weitere Schicht angrenzt.

3. Beschichtete Verglasung nach einem der vorhergehenden Ansprüche, bei der mindestens ein Teil der Schicht, die an das transparente Glassubstrat angrenzt, eine Dicke von mindestens 35 nm, vorzugsweise von mindestens 36 nm, noch bevorzugter von mindestens 40 nm, am meisten bevorzugt von mindestens 45 nm aufweist.

4. Beschichtete Verglasung nach einem der vorhergehenden Ansprüche, bei der die weitere Schicht eine Schicht auf der Basis eines transparenten leitfähigen Oxids (TCO) ist, wobei das TCO eines oder mehrere von fluordotiertem Zinnoxid (SnO₂:F), mit Aluminium, Gallium oder Bor dotiertem Zinkoxid (ZnO:Al, ZnO:Ga, ZnO:B), mit Zinn dotiertem Indiumoxid (ITO), Cadmiumstannat, ITO:ZnO, ITO:Ti, In₂O₃, In₂O₃-ZnO (IZO), In₂O₃: Ti, In₂O₃:Mo, In₂O₃:Ga, In₂O₃:W, In₂O₃:Zr, In₂O₃:Nb, In₂₋₂ₓMₓSnₓO₃, wobei M Zn oder Cu ist, ZnO:F, Zn_{0,9}Mg_{0,1}O:Ga und (Zn,Mg)O:P, ITO:Fe, SnO₂:Co, In₂O₃:Ni, In₂O₃:(Sn,Ni), ZnO:Mn und ZnO:Co, vorzugsweise fluordotiertes Zinnoxid (Sn02:F) ist.

5. Beschichtete Verglasung nach einem der vorhergehenden Ansprüche, bei der die Schicht, die an das transparente Glassubstrat angrenzt, eine Oberfläche aufweist, die vor einem Beschichten der Oberfläche eine arithmetische mittlere Höhe des Oberflächenwerts, Sa, von mindestens 4,5 nm, bevorzugter mindestens 5,0 nm, noch bevorzugter mindestens 5,5 nm, noch bevorzugter mindestens 6,0 nm, am meisten bevorzugt mindestens 6,5 nm aufweist.

6. Beschichtete Verglasung nach einem der vorhergehenden Ansprüche, wobei die beschichtete Verglasung eine äußerste Schicht aufweist, wobei die äußerste Schicht eine Oberfläche aufweist, die eine arithmetische mittlere Höhe des Oberflächenwerts Sa von mindestens 12,5 nm, vorzugsweise mindestens 13,5 nm, bevorzugter mindestens 14,5 nm, noch bevorzugter mindestens 15,5 nm, meistbevorzugt mindestens 16,0 nm, aber vorzugsweise höchstens 45 nm, bevorzugter höchstens 30 nm, noch bevorzugter höchstens 25 nm, meistbevorzugt höchstens 21 nm aufweist.

7. Beschichtete Verglasung nach einem der vorhergehenden Ansprüche, wobei die beschichtete Verglasung einen durchschnittlichen Trübungswert, gemessen nach ASTM D1003-13, von mindestens 0,5 %, vorzugsweise mindestens 0,6 %, noch bevorzugter mindestens 0,7 %, meistbevorzugt mindestens 0,8 % aufweist.

8. Beschichtete Verglasung nach einem der vorhergehenden Ansprüche, wobei die beschichtete Verglasung mindestens die folgenden Schichten in Folge umfasst, vorzugsweise daraus besteht:
ein transparentes Glassubstrat,
eine Schicht auf der Basis eines Oxids eines Metalls, das eine Schicht auf der Basis von SnO₂ ist,
eine Schicht auf der Basis eines Oxids eines Metalloids, die eine Schicht auf der Basis von SiO₂ ist, und
eine weitere Schicht, die eine Schicht auf Basis von fluordotiertem Zinnoxid (SnO₂:F) ist,
wobei die Schicht, die an das transparente Glassubstrat angrenzt, eine Oberfläche aufweist, die vor einem Beschichten der Oberfläche einen arithmetisch mittlere Höhe des Oberflächenwerts Sa, gemessen nach ISO 25178-2:2012, von mindestens 4,5 nm aufweist, und
wobei die beschichtete Verglasung einen durchschnittlichen Trübungswert, gemessen nach ASTM D1003-13, von mindestens 0,50% aufweist.

9. Verfahren zur Herstellung einer beschichteten Verglasung nach einem der vorhergehenden Ansprüche, das nacheinander die folgenden Schritte umfasst:
a) Bereitstellen eines transparenten Glassubstrats,
b) Aufbringen mindestens der folgenden Schichten nacheinander, direkt oder indirekt, auf eine Oberfläche des transparenten Glassubstrats:
i) eine Schicht auf der Basis eines Oxids eines Metalls und/oder eine Schicht auf der Basis eines Oxids eines Metalloids, und
ii) eine weitere Schicht.

10. Verfahren nach Anspruch 9, bei dem Schritt b) i) mittels chemischer Gasphasenabscheidung (CVD) durchgeführt wird, vorzugsweise bei dem beide Schritte b) i) und b) ii) mittels CVD durchgeführt werden, und/oder bei dem Schritt b) i) durchgeführt wird, wenn das transparente Glassubstrat eine Temperatur von mindestens 690°C, vorzugsweise von mindestens 715°C, bevorzugter von mindestens 725°C, meistbevorzugt von mindestens 730°C aufweist.

11. Verfahren nach einem der Ansprüche 9 oder 10, bei dem das Aufbringen der Schicht auf der Basis eines Oxids eines Metalls in Schritt b) i) durchgeführt wird, wenn das transparente Glassubstrat eine Temperatur von mindestens 690°C, vorzugsweise mindestens 715°C, bevorzugter mindestens 725°C, meistbevorzugt mindestens 730°C, jedoch höchstens 790°C, vorzugsweise höchstens 760°C, bevorzugter höchstens 750°C, meistbevorzugt höchstens 745°C aufweist.

12. Verfahren nach einem der Ansprüche 9 bis 11, wobei das Verfahren ferner im Anschluss an Schritt b) ii) das Biegen der beschichteten Verglasung umfasst.

13. Verwendung der beschichteten Verglasung nach einem der Ansprüche 1 bis 8 als Schaufensterverglasung für den Einzelhandel, als Ausstellungsraum verglasung oder als Kühlverglasung.

14. Beschichtete Verglasung, bestehend aus den folgenden Schichten:
einem transparenten Glassubstrat, und
einer Basisschicht auf der Grundlage eines Oxids eines Metalls oder auf der Grundlage eines Oxids eines Metalloids,
wobei die Basisschicht eine Oberfläche aufweist, die bei einer Messung nach ISO 25178-2:2012 eine mittlere arithmetische Höhe des Oberflächenwertes Sa von mindestens 4,0 nm aufweist.

15. Beschichtete Verglasung, die mindestens die folgenden Schichten in Folge umfasst
ein transparentes Glassubstrat,
eine Schicht auf der Basis eines Oxids eines Metalls und/oder eine Schicht auf der Basis eines Oxids eines Metalloids, und
eine weitere Schicht,
wobei entweder die Schicht auf der Basis eines Oxids eines Metalls oder die Schicht auf der Basis eines Oxids eines Metalloids an das transparente Glassubstrat angrenzt,
wobei die beschichtete Verglasung eine äußerste Schicht umfasst, wobei die äußerste Schicht eine Oberfläche umfasst, die eine arithmetische mittlere Höhe des Oberflächenwerts, Sa, gemessen nach ISO 25178-2:2012, von mindestens 15,5 nm aufweist, und
wobei die beschichtete Verglasung einen durchschnittlichen Trübungswert, gemessen nach ASTM D1003-13, von mindestens 0,47 % aufweist.

## Revendications

1. Vitrage revêtu comprenant au moins les couches suivantes successivement :
un substrat en verre transparent,
une couche à base d'un oxyde d'un métal et/ou une couche à base d'un oxyde d'un métalloïde, et,
une autre couche,
dans lequel soit ladite couche à base d'un oxyde d'un métal soit ladite couche à base d'un oxyde d'un métalloïde est adjacente audit substrat en verre transparent,
dans lequel ladite couche qui est adjacente audit substrat en verre transparent comprend une surface qui, avant un revêtement de ladite surface, présente une hauteur moyenne arithmétique de la valeur de surface, Sa, d'au moins 4,0 nm lorsque testé selon ISO 25178-2:2012, et dans lequel le vitrage revêtu présente une valeur moyenne de voile d'au moins 0,47 % lorsque testé selon ASTM D1003 - 13.

2. Vitrage revêtu selon la revendication 1, dans lequel ladite couche à base d'un oxyde d'un métal est une couche à base de SnO₂,TiO₂ ou oxyde d'aluminium, de préférence SnO₂,et dans lequel ladite couche à base d'un oxyde d'un métalloïde est une couche à base de SiO₂ ou d'oxynitrure de silicium, de préférence SiO₂, et/ou dans lequel à la fois ladite couche à base d'un oxyde d'un métal et ladite couche à base d'un oxyde d'un métalloïde sont présentes, et dans lequel le substrat en verre transparent est adjacent à la couche à base d'un oxyde d'un métal et la couche à base d'un oxyde d'un métalloïde est adjacente à l'autre couche.

3. Vitrage revêtu selon l'une quelconque des revendications précédentes, dans lequel au moins une portion de ladite couche qui est adjacente audit substrat en verre transparent présente une épaisseur d'au moins 35 nm, de préférence d'au moins 36 nm, encore mieux d'au moins 40 nm, bien mieux encore d'au moins 45 nm.

4. Vitrage revêtu selon l'une quelconque des revendications précédentes, dans lequel ladite autre couche est une couche à base d'un oxyde conducteur transparent (TCO), dans lequel le TCO est un ou plusieurs d'oxyde d'étain dopé au fluor (SnO₂:F), oxyde de zinc dopé avec de l'aluminium, gallium ou bore (ZnO:Al, ZnO:Ga, ZnO:B), oxyde d'indium dopé avec de l'étain (ITO), stannate de cadmium, ITO:ZnO, ITO:Ti, In₂O₃, In₂O₃-ZnO (IZO), In₂O₃:Ti, In₂O₃:Mo, In₂O₃Ga, In₂O₃:W, In₂O₃:Zr, In₂O₃:Nb, In₂₋₂ₓMₓSnₓO₃ et M étant Zn ou Cu, ZnO:F, Zn_{0.9}Mg_{0.1}O:Ga, et (Zn,Mg)O:P, ITO:Fe, SnO₂:Co, In₂O₃:Ni, In₂O₃:(Sn, Ni), ZnO:Mn, et ZnO:Co, de préférence oxyde d'étain dopé au fluor (SnO₂:F).

5. Vitrage revêtu selon l'une quelconque des revendications précédentes, dans lequel ladite couche qui est adjacente audit substrat en verre transparent comprend une surface qui, avant un revêtement de ladite surface, présente une hauteur moyenne arithmétique de la valeur de surface, Sa, d'au moins 4,5 nm, de préférence d'au moins 5,0 nm, encore mieux d'au moins 5,5 nm, bien mieux encore d'au moins 6,0 nm, particulièrement de préférence d'au moins 6,5 nm.

6. Vitrage revêtu selon l'une quelconque des revendications précédentes, dans lequel le vitrage revêtu comprend une couche externe dans lequel ladite couche externe comprend une surface qui présente une hauteur moyenne arithmétique de la valeur de surface, Sa, d'au moins 12,5 nm, de préférence d'au moins 13,5 nm, encore mieux d'au moins 14,5 nm, bien mieux encore d'au moins 15,5 nm, particulièrement de préférence d'au moins 16,0 nm, mais de préférence d'au plus 45 nm, encore mieux d'au plus 30 nm, encore mieux d'au plus 25 nm, particulièrement de préférence d'au plus 21 nm.

7. Vitrage revêtu selon l'une quelconque des revendications précédentes, dans lequel le vitrage revêtu présente une valeur moyenne de voile d'au moins 0,5 %, de préférence d'au moins 0,6 %, encore mieux d'au moins 0,7 %, bien mieux encore d'au moins 0,8 % lorsque testé selon ASTM D1003 - 13.

8. Vitrage revêtu selon l'une quelconque des revendications précédentes, dans lequel le vitrage revêtu comprend, de préférence consiste en, au moins les couches suivantes successivement :
un substrat en verre transparent,
une couche à base d'un oxyde d'un métal qui est une couche à base de SnO₂,
une couche à base d'un oxyde d'un métalloïde qui est une couche à base de SiO₂, et
une autre couche qui est une couche à base d'oxyde d'étain dopé au fluor (SnO₂:F),
dans lequel ladite couche qui est adjacente audit substrat en verre transparent comprend une surface qui, avant un revêtement de ladite surface, présente une hauteur moyenne arithmétique de la valeur de surface, Sa, d'au moins 4,5 nm lorsque testé selon ISO 25178-2:2012, et dans lequel le vitrage revêtu présente une valeur moyenne de voile d'au moins 0,5 % lorsque testé selon ASTM D1003 - 13.

9. Procédé de fabrication d'un vitrage revêtu selon l'une quelconque des revendications précédentes comprenant les étapes suivantes successivement :
(a) fourniture d'un substrat en verre transparent,
(b) dépôt d'au moins les couches suivantes successivement directement ou indirectement sur une surface du substrat en verre transparent :
i) une couche à base d'un oxyde d'un métal et/ou une couche à base d'un oxyde d'un métalloïde, et
ii) une autre couche.

10. Procédé selon la revendication 9, dans lequel l'étape b) i) est réalisée en utilisant un dépôt chimique en phase vapeur (CVD), de préférence dans lequel à la fois les étapes b) i) et b) ii) sont réalisées en utilisant CVD, et/ou dans lequel l'étape b) i) est réalisée lorsque le substrat en verre transparent est à une température d'au moins 690°C, de préférence d'au moins 715°C, encore mieux d'au moins 725°C, bien mieux encore d'au moins 730°C.

11. Procédé selon l'une quelconque des revendications 9 ou 10, dans lequel ledit dépôt de la couche à base d'un oxyde d'un métal dans l'étape b) i) est réalisé lorsque le substrat en verre transparent est à une température d'au moins 690°C, de préférence d'au moins 715°C, encore mieux d'au moins 725°C, bien mieux encore d'au moins 730°C, mais d'au plus 790°C, de préférence d'au plus 760°C, encore mieux d'au plus 750°C, bien mieux encore d'au plus 745°C.

12. Procédé selon l'une quelconque des revendications 9 à 11, dans lequel le procédé comprend de plus, après l'étape b) ii), la courbure du vitrage revêtu.

13. Utilisation du vitrage revêtu selon l'une quelconque des revendications 1 à 8 comme un vitrage de vitrine de commerce, un vitrage de salle d'exposition ou un vitrage de réfrigération.

14. Vitrage revêtu consistant en les couches suivantes :
un substrat en verre transparent, et
une couche de base à base d'un oxyde d'un métal ou à base d'un oxyde d'un métalloïde,
dans lequel ladite couche de base comprend une surface qui présente une hauteur moyenne arithmétique de la valeur de surface, Sa, d'au moins 4,0 nm lorsque testé selon ISO 25178-2:2012.

15. Vitrage revêtu comprenant au moins les couches suivantes successivement :
un substrat en verre transparent,
une couche à base d'un oxyde d'un métal et/ou une couche à base d'un oxyde d'un métalloïde, et,
une autre couche,
dans lequel soit ladite couche à base d'un oxyde d'un métal soit ladite couche à base d'un oxyde d'un métalloïde est adjacente audit substrat en verre transparent,
dans lequel le vitrage revêtu comprend une couche externe dans lequel ladite couche externe comprend une surface qui présente une hauteur moyenne arithmétique de la valeur de surface, Sa, d'au moins 15,5 nm lorsque testé selon ISO 25178-2:2012, et
dans lequel le vitrage revêtu présente une valeur moyenne de voile d'au moins 0,47 % lorsque testé selon ASTM D1003 - 13.
